# EUROPEAN PATENT SPECIFICATION

(11) **EP 2 772 029 B1**
(45) Date of publication and mention of the grant of the patent: **01.03.2017**
(21) Application number: 11874856.5
(22) Date of filing: 28.10.2011
(51) Int. Cl.: H04W 36/00, H04W 80/04

(54) **IPV6 TRANSITION TOOL HANDLING**
HANDHABUNG EINES IPV6-ÜBERGANGSWERKZEUGS
EXÉCUTION D'UN OUTIL DE TRANSITION IPV6

(43) Date of publication of application: 03.09.2014
(73) Proprietor: Telefonaktiebolaget LM Ericsson (publ), 164 83 Stockholm (SE)
(72) Inventor: GUO, Lei, Shanghai 200125 (CN)
(74) Representative: Ericsson
(86) International application number: PCT/CN2011/001803
(87) International publication number: WO 2013/059965

(56) References cited:
- WO-A2-2011/018627
- CN-A- 101 291 529
- CN-A- 101 552 977
- CN-A- 101 557 646
- US-A1- 2011 242 975
- NOKIA SIEMENS NETWORKS ET AL: "Fix ISR activation procedure taking SGW capability into account", 3GPP DRAFT; S2-103790_ISR_REL10_CR1728, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Brunstad; 20100903, 24 August 2010 (2010-08-24), XP050458782, [retrieved on 2010-08-24]
- ERICSSON: "Low Access Priority indicator", 3GPP DRAFT; C4-110015 (WAS 3042 (2730 (WAS 2549) CR 0790 29274_MTC INDICATOR PA3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Ljubljana; 20110124, 14 January 2011 (2011-01-14), XP050483829, [retrieved on 2011-01-14]

## Description

### TECHNICAL FIELD

The present invention relates to a method for signalling in an infrastructure network comprising Source Serving Node, S-SN, a Target Serving Node, T-SN , and a first Gateway, GW, wherein at least one Packet Data Network, PDN, bearer is established for a UE. The present invention further relates to a T-SN and a first GW adapted for the same purpose.

### BACKGROUND ART

Different transition mechanisms are available for IPv6. These mechanisms are intended to ensure interoperability between IPv4 and IPv6 and can be categorized in three broad classes: dual-stack, tunnels, and translation mechanisms.

The term "dual-stack" refers to TCP/IP capable devices providing support for both IPv4 and IPv6. The term "tunneling" refers to a means to encapsulate one version of IP in another so the packets can be sent over a backbone that does not support the encapsulated IP version. The term "translators" refers to devices capable of translating traffic from IPv4 to IPv6 or vice and versa.

IPv4v6 PDP/PDN (Packet Data Protocol/Packet Data Network) type has been introduced in 3GPP as a vital IPv6 transition tool in mobile network. In 3GPP, a Dual Address Bearer Flag is further defined. These are for instance used in GTP tunnels between two nodes communicating over a GTP (GPRS Tunnelling Protocol) based interface. For GTPv2-C, the Dual Address Bearer Flag is defined in 3GPP TS 29.274, as a bit within Indication IE (Information Element), and shall be used on GTPv2-C based interface, for instance S2b, S11/S4 and S5/S8. The flag shall be set to 1 when the PDN Type, determined based on UE request and subscription record, is set to IPv4v6 and all SGSNs (Serving Gateway Support Node), which the UE may be handed over to, support dual addressing. This shall be determined based on node pre-configuration by the operator.

For GTPv1-C, the Dual Address Bearer Flag is defined in 3GPP TS 29.060 as a bit within Common Flags IE (Information Element), and shall be used on GTPv1-C based interface, for instance Gn/Gp. The flag should be set to 1 when the PDP type, determined based on MS (Mobile Station) request and subscription record, is set to IPv4v6 and all SGSNs which the UE may be handed over to support dual addressing. This shall be determined based on node pre-configuration by the operator.

This is to say that IPv4v6 bearer shall not be established for the MS/UE (Mobile Station/User Equipment), if one (or more than one) SGSN (Serving GPRS Support Node) that the MS/UE may be handed over to doesn't support dual addressing. This limits the use of IPv4v6 bearer, even if some or most of the SGSNs in the network have already been capable of dual addressing.

As an exceptional flow, there is possibility that the Dual Address Bearer Flag bit is set to 1, but not in accordance with 3GPP. The MS/UE with IPv4v6 bearer is going to be handed over to a SGSN which doesn't support dual addressing. It is uncertain now what will happen. The third problematic scenario is when the MS/UE is handed over from the dual addressing capable 3GPP access to the dual addressing incapable non-3GPP access.

Nokia Siemens Networks et. Al: "Fix ISR activation procedure taking SGW capability into account", 3GPP draft S2-103790 discloses E-UTRAN initial attach. The E-UTRAN initial attach procedure may be used for emergency attach by UEs that need to perform emergency services but cannot gain normal services from the network. The procedure is also used to establish the first PDN connection over E-UTRAN when the UE already has active PDN connections over a non-3GPP access network and wants to establish simultaneous PDN connections to different APNs over multiple accesses.

Ericsson: "Low Access Priority indicator", 3GPP draft C4-110015 discloses information elements in a Create Session Request message. One such information element is an indication flag. Information elements in a Modify Bearer Request message is also disclosed, where one information element is Bearer Contexts to be modified.

WO 2011/018627 discloses that a UE is configured to detect a change of routing area or a change of radio access technology from LTE to UTRAN or GERAN. When such change has been detected, the UE a PDP context or a EPS bearer is deactivated.

US 2011/242975 discloses single and dual internet protocol bearer support.

Hence, there is a need for improving handover of PDN bearers between serving nodes.

### SUMMARY OF THE INVENTION

The object of the present invention is therefore to introduce a fallback procedure which can handle a scenario where at least one SGSN or non-3GPP Serving Node in an infrastructure network does not support dual addressing.

The object of the present invention is solved by means of a method for signalling in an infrastructure network comprising a Source Serving Node, S-SN, a Target SN, T-SN and a first Gateway. At least one Packet Data Network, PDN, bearer is established for a User Equipment, UE, when at least one PDN bearer is handed over from the S-SN to the T-TN. The network performs the steps of:
- the T-SN sends a modify bearer request to the first GW, said bearer request indicating that the T-SN does not support dual Internet Protocol, IP, addressing for said PDN bearer being handed over, wherein the modify bearer request comprises a Dual Address Bearer Flag being set to null to indicate that the T-SN (11) does not support dual Internet Protocol, IP, addressing for said bearer (15) being handed over,
- the first GW on the basis of the received modify bearer request initiates a modify bearer procedure where a new Packet Data Network, PDN, bearer type for single IP addressing is defined,
- the first GW further sends a modify bearer response to the T-SN, said bearer response comprising information about the new PDN bearer type.

The object of the present invention is also solved by means of a Target Serving Node, T-SN, according to Claim 8.

The object of the present invention is also solved by means of a first Gateway, GW, according to Claim 12.

The present invention provides a method which enables usage of IPv4v6 bearer even if not all of the SGSNs or non-3GPP SNs (Serving Node) in the infrastructure network that the UE is handed over to supports dual addressing. The method improves the session continuity by failing the dual addressing back to single addressing hen the SGSN or non-3GPP SNs that the UE is handed over to do not support dual addressing.

### BRIEF DESCRIPTION OF THE DRAWINGS

The invention will be described in greater detail in the following, with reference to the embodiments that are shown in the attached drawings, in which:
- Figure 1: illustrates the involved entities in the present invention.
- Figure 2: illustrates a first embodiment of a control plane setup for a Routing Area Update procedure according to the present invention.
- Figure 3: illustrates different scenarios for an UE movement from a dual addressing capable S-SN to a dual addressing incapable T-SN.
- Figure 4: illustrates a second embodiment of a control plane setup for a Routing Area Update procedure according to the present invention.
- Figure 5: illustrates the method according to the present invention.

### DETAILED DESCRIPTION

The embodiments of the invention with further developments described in the following are to be regarded only as examples and are in no way to limit the scope of the protection provided by the patent claims.

The present invention relates to a method for signalling in an infrastructure network comprising a Source Serving Node, S-SN, a Target SN, T-SN and a first Gateway, wherein a dual addressing UE moved from the S-SN to the T-SN. The S-SN is capable for handling dual addressing while the T-SN is incapable of handling dual addressing. The present invention also relates to a Target Serving Node and a first Gateway arranged for the same purpose. Even though the detailed description describes the method performed by this entities/network, the person skilled in the art realizes that this entities/network adapted to perform these method steps is also disclosed in the description.

IPv4v6 bearer shall not be established for the MS/UE (Mobile Station/User Equipment), if one (or more than one) Serving Node that the MS/UE may be handed over to doesn't support dual addressing. This limits the use of IPv4v6 bearer, even if some of the Serving Nodes in the network have already been capable of dual addressing. The object of the present invention is therefore to introduce a bearer fallback procedure which can handle a scenario where at least one Serving Node in an infrastructure network does not support dual addressing.

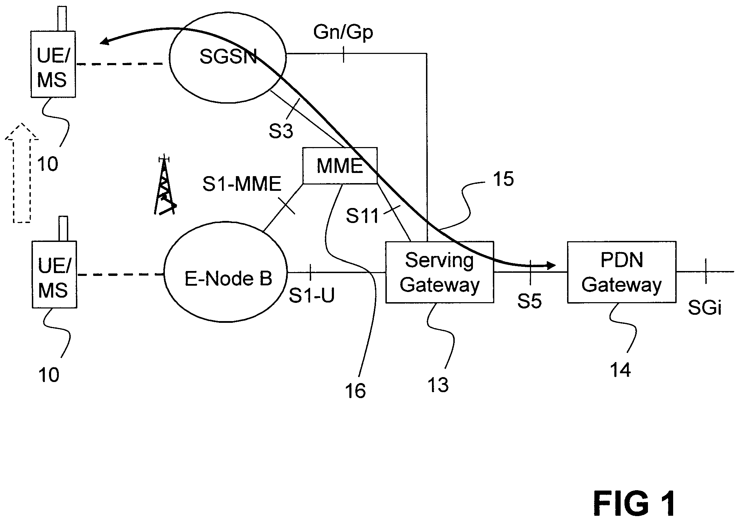

Figure 1 shows involved entities in the present invention. The infrastructure network comprises a Serving Gateway 13 (S-GW), and a PDN Gateway 14, (PDN-GW). At least one Packet Data Network, PDN, bearer 15 is established for a User Equipment 10, UE, between the UE and the PDN-GW.

The term Serving Node will be used in the following. A Source Serving Node, S-SN, is capable of handling dual addressing while a Target Serving Node, T-SN, is incapable of handling dual addressing. The S-SN and the T-TN are part of the infrastructure network.

A person skilled in the art realizes that a Serving Node is for instance in 3GPP a SGSN (Serving GPRS Support Node) or an MME (Mobility Management Entity). 3GPP compliant MME, S4-SGSN and Gn/GP SGSN compliant with 3GPP Release 9 or later are usually capable of handling dual addressing. Gn/Gp SGSN compliant with 3GPP Release 8 or earlier, as well as non-3GPP SN's, are usually incapable to handle dual addressing-.

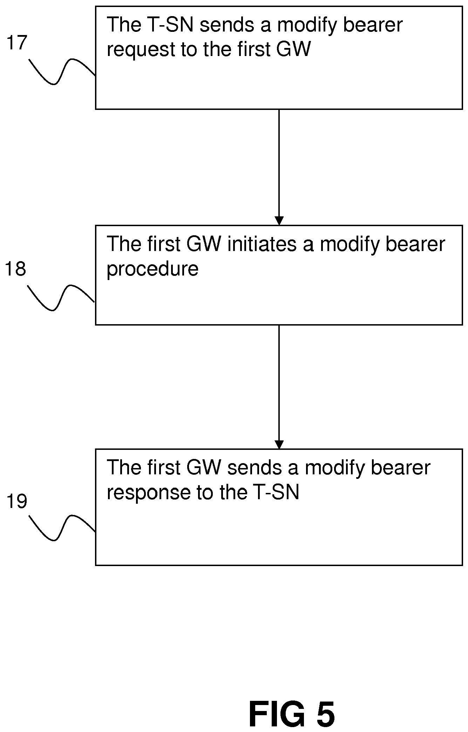

In the present invention, see figure 5, when at least one PDN bearer 15 is handed over from the S-SN, to the T-SN, the network performs the steps of:
1. The T-SN sends 17 a modify bearer request to a first GW 13, 14. Said bearer request indicates that the T-SN does not support dual Internet Protocol, IP, addressing for said PDN bearer 15 being handed over.
2. The first GW 13, 14 on the basis of the received modify bearer request initiates 18 a modify bearer procedure where a new Packet Data Network, PDN, bearer type for single IP addressing is defined.
3. The first GW 13, 14 further sends 19 a modify bearer response to the T-SN. Said bearer response comprises information about the new PDN bearer type.

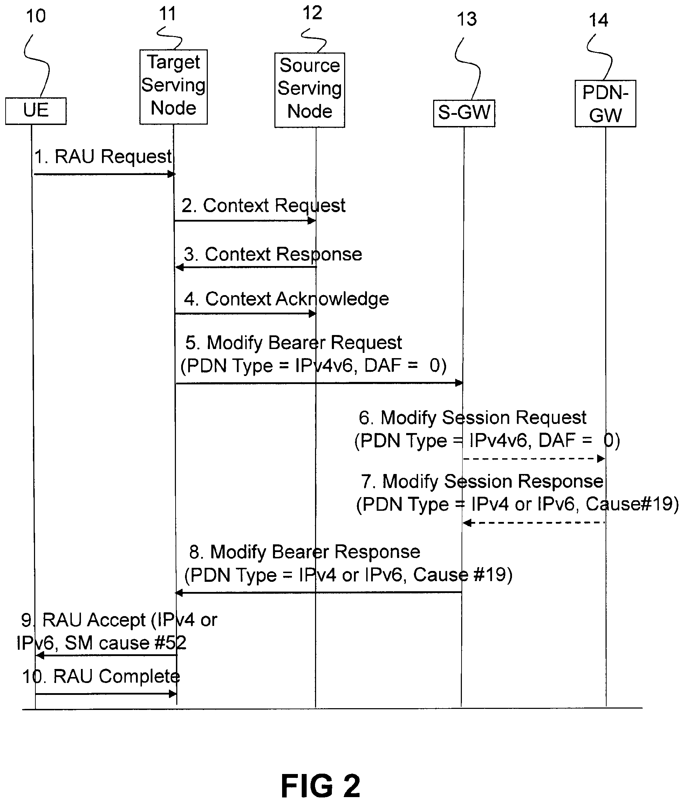

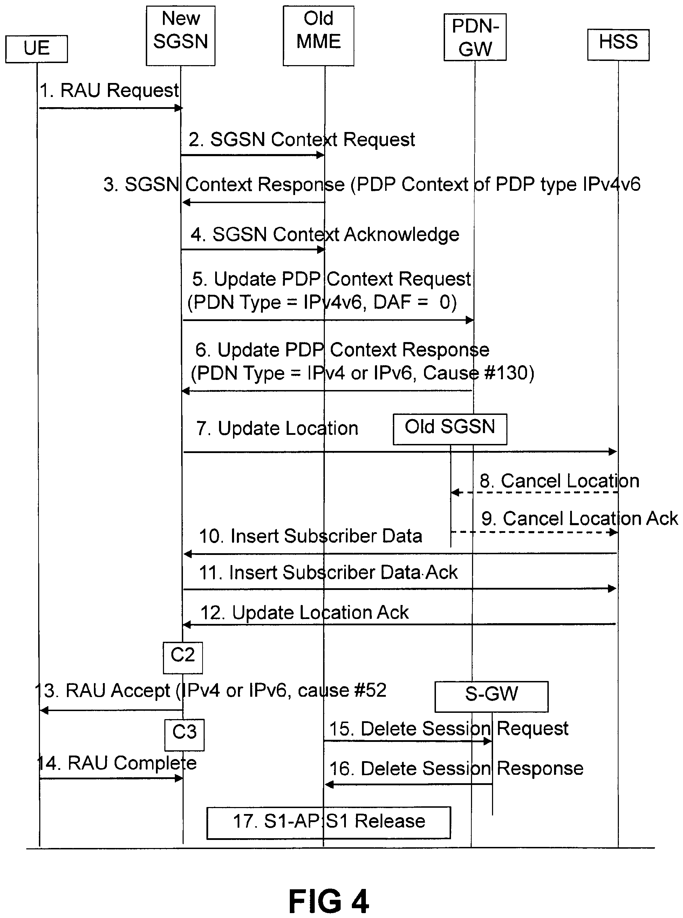

The first GW is for instance the S-GW 13 or the PDN-GW 14 as will be illustrated with reference to figures 2 and 4. It may also be a GGSN (Gateway GPRS Support Node). The main concept of the present invention is therefore provide a procedure which covers all scenarios when the UE 10 moves from dual addressing capable S-SN to dual addressing incapable T-SN.

The procedure according to the present invention enables usage of IPv4v6 bearer even if not all of the SGSNs in the infrastructure network that the UE is handed over to supports dual addressing. The method improves the session continuity. When the SGSN or non-3GPP that the UE is handed over to do not support dual addressing, the bearer falls back to single address signalling.

An embodiment of the present invention will be described with reference to figure 2. In this embodiment, a Routing Area Update is requested. The PDN bearer 15 is to be moved from the S-SN 12 (a S4 SGSN or MME) capable of handling IPv4v6 bearers to the T-SN 11 (a SGSN) incapable of handling IPv4v6 bearers. In the procedure there is no change of S-GW 13. The following steps are performed:
1. UE 10 with IPv4v6 bearer(s) moves (see dotted arrow in figure 2) and is going to be handed over to the T-SN 11, which doesn't support dual addressing. The T-SN receives a Routing Area Update Request.
2. The T-SN 11 sends a Context Request to the S-SN 12 (an MME or S4 SGSN).
3. The S-SN 12 responds with a Context Response (IPv4v6 Bearer Contexts) to the T-SN 11.
4. The T-SN 11 sends a Context Acknowledge to the S-SN 12.
5. The T-SN 11 sends a Modify Bearer Request (IPv4v6, DAF=0) to the Serving GW 13. The first GW is consequently here represented by the S-GW. The flag DAF = 0 indicates that the T-SN doesn't support dual addressing. The modify bearer request consequently comprises a Dual Address Bearer Flag (DAF) that is set to null to indicate that the T-SN does not support dual Internet Protocol, IP, addressing for said bearer being handed over.
6. The S-GW 13 sends a Modify Session Request (IPv4v6, DAF=0) to a second GW, being the PDN-GW 14. The Dual Address Bearer Flag (DAF) is set to null to indicate that the T-SN does not support dual Internet Protocol, IP, addressing for said PDN bearer. Said session request consequently indicates that T-SN 11 does not support dual IP addressing for said PDN bearer 15 being handed over.
7. The PDN-GW 14 (second GW) responds with a Modify Session Response (PDN Type = IPv6, Cause#19). Cause #19 indicates: "New PDN type due to single address bearer only". The PDN-GW consequently indicates the new PDN bearer type.
8. S-GW 13 (first GW) sends a Modify Bearer Response (PDN Type = IPv6 or IPv4, Cause#19) to the T-SN 11. The new PDN type, IPv6 or IPv4, can be configurable in the PDN-GW 14.
9. The T-SN 11 sends a Routing Area Update Accept to the UE 10 (PDN Type = IPv6 or IPv4, SM cause #52. Cause #52 indicates: "single address bearers only allowed". The T-SN when receiving the modify bearer response it consequently sends a service response to the UE with information about the new PDN bearer type.
10. The UE 10 responds with a Routing Area Update Complete. The UE may request a new PDN connection for another IP version subsequently. The UE consequently is able to request for a new PDN connection on the basis of the new PDN bearer type.

A person skilled in the art realizes that step 5 implies that the T-SN 11 determines that dual IP addressing is present on said PDN bearer 15 being handed over on the basis of bearer contexts provided by the S-SN 12 during a context exchange procedure.

A second embodiment is shown in figure 4. In this embodiment, a Routing Area Update is requested. UE changes from UTRAN to GERAN. The PDN bearer 15 is to be moved from an old SGSN (the S-SN), capable of handling IPv4v6 bearers, to a new SGSN (the T-SN), incapable of handling IPv4v6 bearers. Signalling with old MME is also performed to get information of bearer type. The figure itself illustrates the different steps and they will therefore not be described in detail here.

In this embodiment, the first GW is represented by the PDN-GW 14 which receives said Modify Bearer Request (IPv4v6, DAF=0), here named "Update PDP Context Request", from the T-SN. No Modify Session Request/Response is present since no second GW is involved. The PDN-GW 14 (first GW) responds to the Modify Bearer Request with a Modify Session Response (PDN Type = IPv6, Cause#130), here named "Update PDP Context Response". Cause #130 indicates: "New PDN type due to single address bearer only". The PDN-GW consequently indicates the new PDN bearer type.

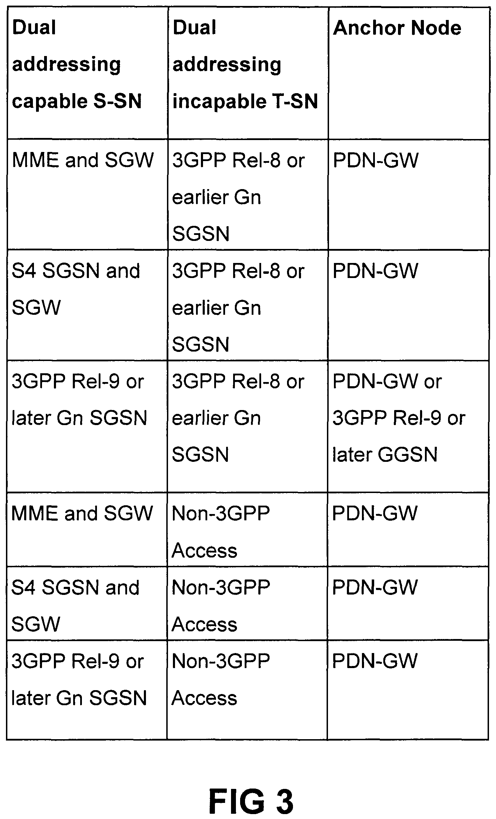

It will be appreciated by a person skilled in the art that the invention is not to be regarded as being limited to the embodiments described above, a number of additional variants and modifications being possible within the scope of the subsequent patent claims. In the procedure according to figures 2 and 4, there is a RAU (Routing Area Update) procedure where the PDN bearer 15 is to be moved from the S-SN 12 (for example a S4 SGSN or MME) to the T-SN 11 (for example a Gn-SGSN) incapable of handling IPv4v6 bearers. Figure 3 illustrates further scenarios for an UE movement from a dual addressing capable S-SN to a dual addressing incapable T-SN. The anchor node is either PDN-GW or GGSN (Gateway GPRS Support Node). The person skilled in the art would realize that the following applicable scenarios are also embraced within the present invention:
- UE move from IPv4v6 capable S-SN (MME or S4 SGSN and S-GW) to IPv4v6 incapable non-3GPP access.
- UE move from IPv4v6 capable S-SN (Gn-SGSN) to IPv4v6 incapable non-3GPP access.

In all applications there is a need for the procedure according to figure 5 to be performed. That is that the UE 10, the T-SN 11, the S-SN 12, and the first GW 13,14 exchanges information to ensure an IPv4v6 bearer fallback to single address when a node in the infrastructure network does not support dual Internet Protocol, IP, addressing for a PDN bearer 15 being handed over.

## Claims

1. A method for signalling in an infrastructure network comprising a Source Serving Node (12), S-SN, a Target Serving Node (11), T-SN, and a first Gateway (13,14), GW, wherein at least one Packet Data Network, PDN, bearer (15) is established for a User Equipment (10), UE, when at least one PDN bearer (15) is handed over from the S-SN (12) to the T-SN (11), the network performs the steps of:
the T-SN (11) sends (17) a modify bearer request to the first GW (13,14), said bearer request indicating that the T-SN (11) does not support dual Internet Protocol, IP, addressing for said PDN bearer (15) being handed over, wherein the modify bearer request comprises a Dual Address Bearer Flag being set to null to indicate that the T-SN (11) does not support dual Internet Protocol, IP, addressing for said bearer (15) being handed over,
the first GW (13,14) on the basis of the received modify bearer request initiates (18) a modify bearer procedure where a new Packet Data Network, PDN, bearer type for single IP addressing is defined,
the first GW (13,14) further sends (19) a modify bearer response to the T-SN (11), said bearer response comprising information about the new PDN bearer type.

2. The method according to claim 1, wherein the modify bearer procedure comprise the steps of:
the first GW (13) sends a modify session request to a second GW (14), said session request indicating that T-SN (11) does not support dual IP addressing for said PDN bearer (15) being handed over,
the second GW (14) sends a modify session response to the first GW (13), said session response indicating the new PDN bearer type.

3. The method according to claim 2, wherein the modify session request comprising a Dual Address Bearer Flag being set to null to indicate that the T-SN (11) does not support dual Internet Protocol, IP, addressing for said PDN bearer (15) being handed over.

4. The method according to any of the preceding claims, wherein the T-SN (11) determines that dual IP addressing is present on said PDN bearer (15) being handed over on the basis of bearer contexts provided by the S-SN (12) during a context exchange procedure.

5. The method according to any of the preceding claims, wherein the T-SN (11) when receiving said modify bearer response sends a service response to the UE (10) with information about the new PDN bearer type.

6. The method according to claim 5, wherein the new PDN bearer type is IPv4 or IPv6 that can be configured in a Packet Data Network-Gateway PDN-GW (14).

7. The method according to any of the preceding claims, wherein the UE (10) requests for a new PDN connection on the basis of the new PDN bearer type.

8. A Target Serving Node (11), T-SN, arranged for signalling in an infrastructure network comprising the T-SN and a first Gateway (13,14), GW, wherein at least one Packet Data Network, PDN, bearer (15) is established for a User Equipment (10), UE,
**characterized in that**
the T-SN (11) is arranged to send a modify bearer request to the first GW (13,14) when at least one PDN bearer (15) is handed over from a Source-Serving Node (12), S-SN, in the network to the T-SN (11), T-SN, said bearer request indicating that the T-SN (11) does not support dual Internet Protocol, IP, addressing for said PDN bearer (15) being handed over, wherein the modify bearer request comprises a Dual Address Bearer Flag being set to null to indicate that the T-SN (11) does not support dual Internet Protocol, IP, addressing for said bearer (15) being handed over; and
the T-SN (11) is arranged to receive (19) a modify bearer response from the first GW (13,14), the modify bearer response comprising information about a new PDN bearer type for single IP addressing defined in a modify bearer procedure initiated at the first GW (13, 14) on the basis for the sent modify bearer request.

9. The T-SN (11) according to claim 8, wherein the T-SN (11) is arranged to determine that dual IP addressing is present on said PDN bearer (15) being handed over on the basis of bearer contexts provided by the S-SN (12) during a context exchange procedure.

10. The T-SN (11) according to any of the claims 8-9, wherein the T-SN (11) is arranged to set a Dual Address Bearer Flag in the modify bearer request to null to indicate that the T-SN (11) does not support dual Internet Protocol, IP, addressing for said PDN bearer (15) being handed over.

11. The T-SN (11) according to any of the claims 8-10, wherein the T-SN (11) is arranged to send a service response to the UE (10) with information about the new PDN bearer type when receiving a modify bearer response from the first GW (13,14).

12. A first Gateway (13,14), GW, arranged for signalling in an infrastructure network comprising the first GW (13,14), wherein at least one Packet Data Network, PDN, bearer (15) is established for a User, Equipment (10), UE,
**characterised in that**
the first GW (13, 14) is arranged to receive (17) a modify bearer request from a Target-Serving Node, T-SN (11), said bearer request indicating that the T-SN (11) does not support dual Internet Protocol, IP, addressing for a Packet Data Network, PDN, bearer (15) being handed over, wherein the modify bearer request comprises a Dual Address Bearer Flag being set to null to indicate that the T-SN (11) does not support dual Internet Protocol, IP, addressing for said bearer (15) being handed over,
the first GW (13,14) on the basis of the received modify bearer request is arranged to initiate a modify bearer procedure when the at least one PDN bearer (15) is handed over to the T-SN (11), where a new PDN bearer type for single IP addressing is defined,
the first GW (13,14) further is arranged to send a modify bearer response to the T-SN (11), said bearer response comprising information about the new PDN bearer type.

13. The first GW (13) according to claim 12, wherein the first GW (13) is arranged to send a modify session request to a second GW (14) during the modify bearer procedure, said session request indicating that T-SN (11) does not support dual IP addressing for said PDN bearer (15) being handed over, the first GW (13) further being arranged to receive a modify session response from the second GW (14), said session response indicating the new PDN bearer type.

14. The first GW (13) according to claim 13, wherein the first GW (13) is arranged to set a Dual Address Bearer Flag in the modify session request to null to indicate that the T-SN (11) does not support dual Internet Protocol, IP, addressing for said bearer (15) being handed over.

## Patentansprüche

1. Verfahren zur Signalisierung in einem Infrastrukturnetzwerk, das einen Quell-Servingknoten (12), S-SN, einen Ziel-Servingknoten (11), T-SN, und einen ersten Gateway (13, 14), GW, umfasst, worin für eine Benutzereinrichtung (10), UE, mindestens ein Träger (15) im Paketdatennetzwerk, PDN, eingerichtet wird, wenn mindestens ein PDN-Träger (15) vom S-SN (12) an den T-SN (11) übergeben wird, wobei das Netzwerk die Schritte durchführt:
der T-SN (11) sendet (17) eine Trägermodifizierungsanforderung an den ersten GW (13, 14), wobei die Trägeranforderung angibt, dass der T-SN (11) keine doppelte Adressierung im Internetprotokoll, IP, für den PDN-Träger (15) unterstützt, der übergeben wird, worin die Trägermodifizierungsanforderung ein auf null gesetztes Doppeladressträger-Flag umfasst, um anzugeben, dass der T-SN (11) keine doppelte Adressierung im Internetprotokoll, IP, für den Träger (15) unterstützt, der übergeben wird,
der erste GW (13, 14) leitet auf der Grundlage der empfangenen Trägermodifizierungsanforderung eine Trägermodifizierungsprozedur ein (18), worin ein neuer Trägertyp im Paketdatennetzwerk, PDN, zur einfachen IP-Adressierung definiert wird,
der erste GW (13, 14) sendet (19) ferner eine Trägermodifizierungsantwort an den T-SN (11), wobei die Trägerantwort Information über den neuen PDN-Trägertyp umfasst.

2. Verfahren nach Anspruch 1, worin die Trägermodifizierungsprozedur die Schritte umfasst:
der erste GW (13) sendet eine Sitzungsmodifizierungsanforderung an einen zweiten GW (14), wobei die Sitzungsanforderung angibt, dass der T-SN (11) keine doppelte IP-Adressierung für den PDN-Träger (15) unterstützt, der übergeben wird,
der zweite GW (14) sendet eine Sitzungsmodifizierungsantwort an den ersten GW (13), wobei die Sitzungsantwort den neuen PDN-Trägertyp angibt.

3. Verfahren nach Anspruch 2, worin die Sitzungsmodifizierungsanforderung ein auf null gesetztes Doppeladressträger-Flag umfasst, um anzugeben, dass der T-SN (11) keine doppelte Adressierung im Internetprotokoll, IP, für den PDN-Träger (15) unterstützt, der übergeben wird.

4. Verfahren nach einem der vorhergehenden Ansprüche, worin der T-SN (11) auf der Grundlage von Trägerkontexten, die durch den S-SN (12) während einer Kontextaustauschprozedur bereitgestellt werden, bestimmt, dass doppelte IP-Adressierung auf dem PDN-Träger (15) vorliegt, der übergeben wird.

5. Verfahren nach einem der vorhergehenden Ansprüche, worin der T-SN (11), wenn er die Trägermodifizierungsantwort empfängt, eine Dienstantwort mit Information über den neuen PDN-Trägertyp an die UE (10) sendet.

6. Verfahren nach Anspruch 5, worin der neue PDN-Trägertyp IPv4 oder IPv6 ist, was in einem Paketdatennetzwerk-Gateway PDN-GW (14) konfiguriert werden kann.

7. Verfahren nach einem der vorhergehenden Ansprüche, worin die UE (10) eine neue PDN-Verbindung auf der Grundlage des neuen PDN-Trägertyps anfordert.

8. Ziel-Servingknoten (11), T-SN, eingerichtet zur Signalisierung in einem Infrastrukturnetzwerk, das den T-SN und einen ersten Gateway (13, 14), GW, umfasst, worin für eine Benutzereinrichtung (10), UE, mindestens ein Träger (15) im Paketdatennetzwerk, PDN, eingerichtet wird,
**dadurch gekennzeichnet, dass**:
der T-SN (11) dafür eingerichtet ist, eine Trägermodifizierungsanforderung an den ersten GW (13, 14) zu senden, wenn mindestens ein PDN-Träger (15) von einem Quell-Servingknoten (12), S-SN, im Netzwerk an den T-SN (11) übergeben wird, wobei die Trägeranforderung angibt, dass der T-SN (11) keine doppelte Adressierung im Internetprotokoll, IP, für den PDN-Träger (15) unterstützt, der übergeben wird, worin die Trägermodifizierungsanforderung ein auf null gesetztes Doppeladressträger-Flag umfasst, um anzugeben, dass der T-SN (11) keine doppelte Adressierung im Internetprotokoll, IP, für den Träger (15) unterstützt, der übergeben wird; und
der T-SN (11) dafür eingerichtet ist, eine Trägermodifizierungsantwort vom ersten GW (13, 14) zu empfangen (19), wobei die Trägermodifizierungsantwort Information über einen neuen PDN-Trägertyp zur einfachen IP-Adressierung umfasst, der in einer Trägermodifizierungsprozedur definiert wurde, die im ersten GW (13, 14) auf der Grundlage der gesendeten Trägermodifizierungsanforderung eingeleitet wurde.

9. T-SN (11) nach Anspruch 8, worin der T-SN (11) dafür eingerichtet ist, auf der Grundlage von Trägerkontexten, die durch den S-SN (12) während einer Kontextaustauschprozedur bereitgestellt werden, zu bestimmen, dass doppelte IP-Adressierung auf dem PDN-Träger (15) vorliegt, der übergeben wird.

10. T-SN (11) nach einem der Ansprüche 8 bis 9, worin der T-SN (11) dafür eingerichtet ist, ein Doppeladressträger-Flag in der Trägermodifizierungsanforderung auf null zu setzen, um anzugeben, dass der T-SN (11) keine doppelte Adressierung im Internetprotokoll, IP, für den PDN-Träger (15) unterstützt, der übergeben wird.

11. T-SN (11) nach einem der Ansprüche 8 bis 10, worin der T-SN (11) dafür eingerichtet ist, eine Dienstantwort mit Information über den neuen PDN-Trägertyp an die UE (10) zu senden, wenn er eine Trägermodifizierungsantwort vom ersten GW (13, 14) empfängt.

12. Erster Gateway (13, 14), GW, eingerichtet zur Signalisierung in einem Infrastrukturnetzwerk, das den ersten GW (13, 14) umfasst, worin für eine Benutzereinrichtung (10), UE, mindestens ein Träger (15) im Paketdatennetzwerk, PDN, eingerichtet wird,
**dadurch gekennzeichnet, dass**:
der erste GW (13, 14) dafür eingerichtet ist, eine Trägermodifizierungsanforderung von einem Ziel-Servingknoten, T-SN (11), zu empfangen (17), wobei die Trägeranforderung angibt, dass der T-SN (11) keine doppelte Adressierung im Internetprotokoll, IP, für den PDN-Träger (15) unterstützt, der übergeben wird, worin die Trägermodifizierungsanforderung ein auf null gesetztes Doppeladressträger-Flag umfasst, um anzugeben, dass der T-SN (11) keine doppelte Adressierung im Internetprotokoll, IP, für den Träger (15) unterstützt, der übergeben wird,
der erste GW (13, 14) dafür eingerichtet ist, auf der Grundlage der empfangenen Trägermodifizierungsanforderung eine Trägermodifizierungsprozedur einzuleiten, wenn der mindestens eine PDN-Träger (15) an den T-SN (11) übergeben wird, worin ein neuer PDN-Trägertyp zur einfachen IP-Adressierung definiert wird,
der erste GW (13, 14) ferner dafür eingerichtet ist, eine Trägermodifizierungsantwort an den T-SN (11) zu senden, wobei die Trägerantwort Information über den neuen PDN-Trägertyp umfasst.

13. Erster GW (13) nach Anspruch 12, worin der erste GW (13) dafür eingerichtet ist, während der Trägermodifizierungsprozedur eine Sitzungsmodifizierungsanforderung an einen zweiten GW (14) zu senden, wobei die Sitzungsanforderung angibt, dass der T-SN (11) keine doppelte IP-Adressierung für den PDN-Träger (15) unterstützt, der übergeben wird, wobei der erste GW (13) ferner dafür eingerichtet ist, eine Sitzungsmodifizierungsantwort vom zweiten GW (14) zu empfangen, wobei die Sitzungsantwort den neuen PDN-Trägertyp angibt.

14. Erster GW (13) nach Anspruch 13, worin der erste GW (13) dafür eingerichtet ist, ein Doppeladressträger-Flag in der Sitzungsmodifizierungsanforderung auf null zu setzen, um anzugeben, dass der T-SN (11) keine doppelte Adressierung im Internetprotokoll, IP, für den PDN-Träger (15) unterstützt, der übergeben wird.

## Revendications

1. Procédé de signalisation dans un réseau d'infrastructure comprenant un noeud de desserte source (12), S-SN, un noeud de desserte cible (11), T-SN, et une première passerelle (13, 14), GW, dans lequel au moins une porteuse de réseau de données en paquets, PDN, (15) est établie pour un équipement d'utilisateur (10), UE, lorsqu'au moins une porteuse de réseau PDN (15) est transférée du noeud S-SN (12) au noeud T-SN (11), dans lequel le réseau met en oeuvre les étapes ci-dessous dans lesquelles :
le noeud T-SN (11) envoie (17) une demande de modification de porteuse à la première passerelle, GW, (13, 14), ladite demande de porteuse indiquant que le noeud T-SN (11) ne prend pas en charge un double adressage de protocole Internet, IP, pour ladite porteuse de réseau PDN (15) en cours de transfert intercellulaire, dans lequel la demande de modification de porteuse comporte un drapeau de porteuse à double adresse « Dual Address Bearer », défini sur une valeur nulle, pour indiquer que le noeud T-SN (11) ne prend pas en charge le double adressage de protocole Internet, IP, pour ladite porteuse (15) en cours de transfert intercellulaire ;
la première passerelle, GW, (13, 14), sur la base de la demande de modification de porteuse reçue, initie (18) une procédure de modification de porteuse, où un nouveau type de porteuse de réseau de données en paquets, PDN, pour un adressage unique de protocole IP, est défini,
la première passerelle, GW, (13, 14) envoie en outre (19) une réponse de modification de porteuse au noeud T-SN (11), ladite réponse de porteuse comprenant des informations concernant le nouveau type de porteuse de réseau PDN.

2. Procédé selon la revendication 1, dans lequel la procédure de modification de porteuse comprend les étapes ci-dessous dans lesquelles :
la première passerelle, GW, (13) envoie une demande de modification de session à une seconde passerelle, GW, (14), ladite demande de session indiquant que le noeud T-SN (11) ne prend pas en charge le double adressage IP pour ladite porteuse de réseau PDN (15) en cours de transfert intercellulaire ;
la seconde passerelle, GW, (14) envoie une réponse de modification de session à la première passerelle, GW, (13), ladite réponse de session indiquant le nouveau type de porteuse de réseau PDN.

3. Procédé selon la revendication 2, dans lequel la demande de modification de session comprenant un drapeau de porteuse à double adresse « Dual Address Bearer » qui est défini sur une valeur nulle pour indiquer que le noeud T-SN (11) ne prend pas en charge le double adressage de protocole Internet, IP, pour ladite porteuse de réseau PDN (15) en cours de transfert intercellulaire.

4. Procédé selon l'une quelconque des revendications précédentes, dans lequel le noeud T-SN (11) détermine qu'un double adressage IP est présent sur ladite porteuse de réseau PDN (15) en cours de transfert intercellulaire, sur la base de contextes de porteuse fournis par le noeud S-SN (12) au cours d'une procédure d'échange de contextes.

5. Procédé selon l'une quelconque des revendications précédentes, dans lequel le noeud T-SN (11), suite à la réception de ladite réponse de modification de porteuse, envoie une réponse de service à l'équipement UE (10) avec des informations concernant le nouveau type de porteuse de réseau PDN.

6. Procédé selon la revendication 5, dans lequel le nouveau type de porteuse de réseau PDN correspond au protocole IPv4 ou IPv6 qui peut être configuré dans une passerelle de réseau de données en paquets, PDN-GW (14).

7. Procédé selon l'une quelconque des revendications précédentes, dans lequel l'équipement UE (10) demande une nouvelle connexion de réseau PDN, sur la base du nouveau type de porteuse de réseau PDN.

8. Noeud de desserte cible (11), T-SN, agencé en vue d'une signalisation dans un réseau d'infrastructure comprenant le noeud T-SN et une première passerelle (13, 14), GW, dans lequel au moins une porteuse de réseau de données en paquets, PDN, (15) est établie pour un équipement d'utilisateur (10), UE,
**caractérisé en ce que** :
le noeud T-SN (11) est agencé de manière à envoyer une demande de modification de porteuse à la première passerelle, GW, (13, 14), lorsqu'au moins une porteuse de réseau PDN (15) est transférée, d'un noeud de desserte source (12), S-SN, dans le réseau, au noeud T-SN (11), ladite demande de porteuse indiquant que le noeud T-SN (11) ne prend pas en charge un double adressage de protocole Internet, IP, pour ladite porteuse de réseau PDN (15) en cours de transfert intercellulaire, dans lequel la demande de modification de porteuse comporte un drapeau de porteuse à double adresse « Dual Address Bearer » défini sur une valeur nulle pour indiquer que le noeud T-SN (11) ne prend pas en charge le double adressage de protocole Internet, IP, pour ladite porteuse (15) en cours de transfert intercellulaire ; et
le noeud T-SN (11) est agencé de manière à recevoir (19) une réponse de modification de porteuse, en provenance de la première passerelle, GW, (13, 14), la réponse de modification de porteuse comprenant des informations concernant un nouveau type de porteuse de réseau PDN pour un adressage unique de protocole IP défini dans une procédure de modification de porteuse initiée au niveau de la première passerelle, GW, (13, 14), sur la base de la demande de modification de porteuse envoyée.

9. Noeud T-SN (11) selon la revendication 8, dans lequel le noeud T-SN (11) est agencé de manière à déterminer qu'un double adressage IP est présent sur ladite porteuse de réseau PDN (15) en cours de transfert intercellulaire, sur la base de contextes de porteuse fournis par le noeud S-SN (12) au cours d'une procédure d'échange de contextes.

10. Noeud T-SN (11) selon l'une quelconque des revendications 8 à 9, dans lequel le noeud T-SN (11) est agencé de manière à définir un drapeau de porteuse à double adresse « Dual Address Bearer » dans la demande de modification de porteuse, sur une valeur nulle, pour indiquer que le noeud T-SN (11) ne prend pas en charge le double adressage de protocole Internet, IP, pour ladite porteuse de réseau PDN (15) en cours de transfert intercellulaire.

11. Noeud T-SN (11) selon l'une quelconque des revendications 8 à 10, dans lequel le noeud T-SN (11) est agencé de manière à envoyer une réponse de service à l'équipement UE (10) avec des informations concernant le nouveau type de porteuse de réseau PDN, suite à la réception d'une réponse de modification de porteuse en provenance de la première passerelle, GW, (13, 14).

12. Première passerelle (13, 14), GW, agencé en vue d'une signalisation dans un réseau d'infrastructure comprenant la première passerelle, GW, (13, 14), dans lequel au moins une porteuse de réseau de données en paquets, PDN, (15) est établie pour un équipement d'utilisateur (10), UE,
**caractérisée en ce que** :
la première passerelle, GW, (13, 14) est agencée de manière à recevoir (17) une demande de modification de porteuse en provenance d'un noeud de desserte cible, T-SN (11), ladite demande de porteuse indiquant que le noeud T-SN (11) ne prend pas en charge un double adressage de protocole Internet, IP, pour une porteuse de réseau de données en paquets, PDN, (15) en cours de transfert intercellulaire, dans lequel la demande de modification de porteuse comprend un drapeau de porteuse à double adresse « Dual Address Bearer » défini sur une valeur nulle pour indiquer que le noeud T-SN (11) ne prend pas en charge le double adressage de protocole Internet, IP, pour ladite porteuse (15) en cours de transfert intercellulaire ;
la première passerelle, GW, (13, 14), sur la base de la demande de modification de porteuse reçue, est agencée de manière à initier une procédure de modification de porteuse lorsque ladite au moins une porteuse de réseau PDN (15) est transférée au noeud T-SN (11), où un nouveau type de porteuse de réseau PDN pour un adressage unique de protocole IP est défini ;
la première passerelle, GW, (13, 14) est en outre agencée de manière à envoyer une réponse de modification de porteuse au noeud T-SN (11), ladite réponse de porteuse comprenant des informations concernant le nouveau type de porteuse de réseau PDN.

13. Première passerelle, GW, (13) selon la revendication 12, dans laquelle la première passerelle, GW, (13) est agencée de manière à envoyer une demande de modification de session à une seconde passerelle, GW, (14) au cours de la procédure de modification de porteuse, ladite demande de session indiquant que le noeud T-SN (11) ne prend pas en charge un double adressage IP pour ladite porteuse de réseau PDN (15) en cours de transfert intercellulaire, la première passerelle, GW, (13) étant en outre agencée de manière à recevoir une réponse de modification de session en provenance de la seconde passerelle, GW, (14), ladite réponse de session indiquant le nouveau type de porteuse de réseau PDN.

14. Première passerelle, GW, (13) selon la revendication 13, dans lequel la première passerelle, GW, (13) est agencée de manière à définir un drapeau de porteuse à double adresse « Dual Address Bearer », dans la demande de modification de session, sur une valeur nulle, pour indiquer que le noeud T-SN (11) ne prend pas en charge le double adressage de protocole Internet, IP, pour ladite porteuse (15) en cours de transfert intercellulaire.
